# EUROPEAN PATENT APPLICATION

(11) **EP 3 214 372 A1**
(43) Date of publication of application: **06.09.2017**
(21) Application number: 17157809.9
(22) Date of filing: 24.02.2017
(51) Int. Cl.: F23R 3/28, F23R 3/34, F02C 7/22, F16L 3/12, F16L 39/00

(54) **SPACERS AND CONDUIT ASSEMBLIES HAVING THE SAME**

(30) Priority: 04.03.2016 US 201615061369
(71) Applicant: General Electric Company, Schenectady, NY 12345 (US)
(72) Inventor: DICINTIO, Richard Martin, Greenville, SC 29615 (US); HOFFMAN, Seth Reynolds, Greenville, SC 29615 (US)
(74) Representative: Lee, Brenda

(57) **Abstract**

A spacer 300 is provided. The spacer includes a substantially ring-shaped frame 308 that defines an opening 310 therein having a radius. The spacer also includes a plurality of fins 324 having an arcuate shape and extending a distance generally radially inward from the frame for tangentially supporting a conduit extending through the opening.

## Description

### BACKGROUND

The field of this disclosure relates generally to spacers and, more particularly, to a spacer for aligning conduits in a fuel delivery system of a turbine assembly.

At least some known turbine assemblies include a compressor, a combustor, and a turbine. Gas flows into the compressor and is compressed. Compressed gas is then discharged into the combustor and mixed with fuel, and the resulting mixture is ignited to generate combustion gases. The combustion gases are channeled from the combustor through the turbine, thereby driving the turbine which, in turn, may power an electrical generator coupled to the turbine.

Many known combustors have an axial fuel staging (AFS) system for use in injecting fuel into a combustion zone. At least some known AFS systems include a primary fuel injector upstream from a secondary fuel injector such that the primary and secondary fuel injectors inject fuel into the combustion zone at different axial stages of the combustion zone. Various conduits are typically coupled to the secondary fuel injector for supplying fuel and compressed gas to the secondary fuel injector. It is desirable to maintain proper alignment of these conduits to facilitate improving the useful life of the conduits and to facilitate increasing the overall operating efficiency of the turbine assembly.

### BRIEF DESCRIPTION

In one aspect, a spacer is provided. The spacer includes a substantially ring-shaped frame that defines an opening therein having a radius. The spacer also includes a plurality of fins having an arcuate shape and extending a distance generally radially inward from the frame for tangentially supporting a conduit extending through the opening.

In another aspect, a conduit assembly is provided. The conduit assembly includes a first conduit, a second conduit positioned within the first conduit to define a channel between the first conduit and the second conduit, and a spacer positioned between the first conduit and the second conduit within the channel. The spacer has a substantially ring-shaped frame that defines an opening therein having a radius. The spacer also has a plurality of fins having an arcuate shape and extending a distance generally radially inward from the frame for tangentially supporting the second conduit in substantially concentric alignment with the first conduit within the opening.

In another aspect, a turbine assembly is provided. The turbine assembly includes a combustion can and an axial fuel staging (AFS) system coupled to the combustion can. The AFS system has a secondary fuel injector and a conduit assembly for supplying fuel and compressed gas to the secondary fuel injector. The conduit assembly includes a first conduit, a second conduit positioned within the first conduit to define a channel between the first conduit and the second conduit, and a spacer positioned between the first conduit and the second conduit within the channel. The spacer has a substantially ring-shaped frame that defines an opening therein having a radius. The spacer also has a plurality of fins having an arcuate shape and extending a distance generally radially inward from the frame for tangentially supporting the second conduit in substantially concentric alignment with the first conduit within the opening.

### BRIEF DESCRIPTION OF THE DRAWINGS

Figure 1 is a schematic illustration of an exemplary turbine assembly;
Figure 2 is a schematic illustration of an exemplary conduit assembly for use in a fuel delivery system of the turbine assembly shown in Figure 1;
Figure 3 is a perspective view of an exemplary spacer for use in the conduit assembly shown in Figure 2;
Figure 4 is a side elevation view of the spacer shown in Figure 3; and
Figure 5 is a schematic illustration of the spacer shown in Figure 3 positioned between several conduits of the conduit assembly shown in Figure 2.

### DETAILED DESCRIPTION

The following detailed description illustrates spacers by way of example and not by way of limitation. The description should enable one of ordinary skill in the art to make and use the spacers, and the description describes several embodiments of the spacers. An exemplary spacer is described herein as being coupled within a turbine assembly. However, it is contemplated that the spacer has general application to a broad range of systems in a variety of fields other than turbine assemblies.

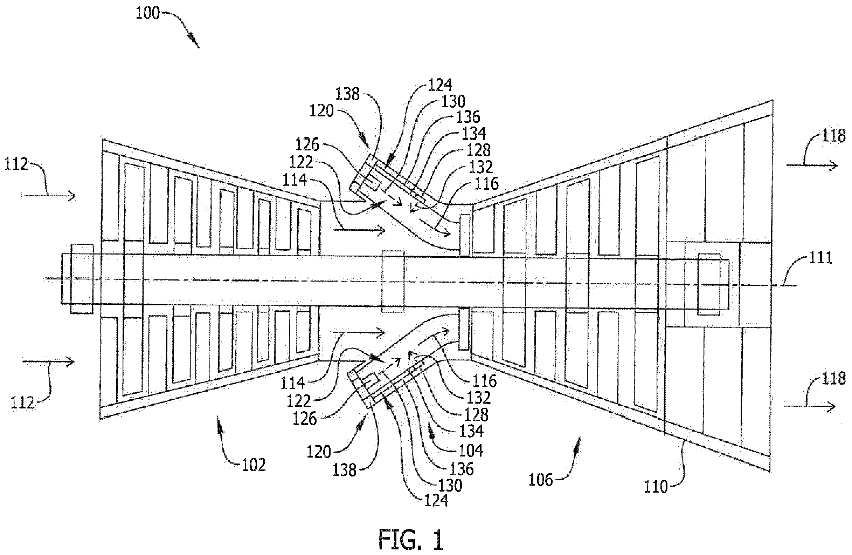

Figure 1 illustrates an exemplary turbine assembly 100. In the exemplary embodiment, turbine assembly 100 is a gas turbine assembly that includes a compressor 102, a combustor 104, and a turbine 106 coupled in flow communication with one another within a casing 110 along a centerline axis 111. In operation, a working gas 112 flows into compressor 102 and is compressed and channeled into combustor 104. Compressed gas 114 is mixed with fuel (not shown) and ignited in combustor 104 to generate combustion gases 116 that are channeled into turbine 106 and then discharged from turbine 106 as exhaust 118.

In the exemplary embodiment, combustor 104 includes a plurality of combustion cans 120. Combustion cans 120 define a combustion zone 122 into which fuel and compressed gas 114 are injected via a fuel delivery system (e.g., an axial fuel staging (AFS) system 124). AFS system 124 includes a primary fuel injector 126 and a secondary fuel injector 128 positioned axially downstream from primary fuel injector 126. A first mixture 130 of fuel and compressed gas 114 is injected into combustion zone 122 via primary fuel injector 126, and a second mixture 132 of fuel and compressed gas 114 is injected into combustion zone 122 via secondary fuel injector 128. Each secondary fuel injector 128 is coupled to a sleeve assembly 134 that defines part of combustion zone 122, and each secondary fuel injector 128 is supplied with fuel and compressed gas 114 via a conduit assembly 136. In other embodiments, turbine assembly 100 may have any suitable arrangement of fuel injectors, and conduit assembly 136 may be used to supply fuel and/or compressed gas 114 to any one or more of the fuel injectors.

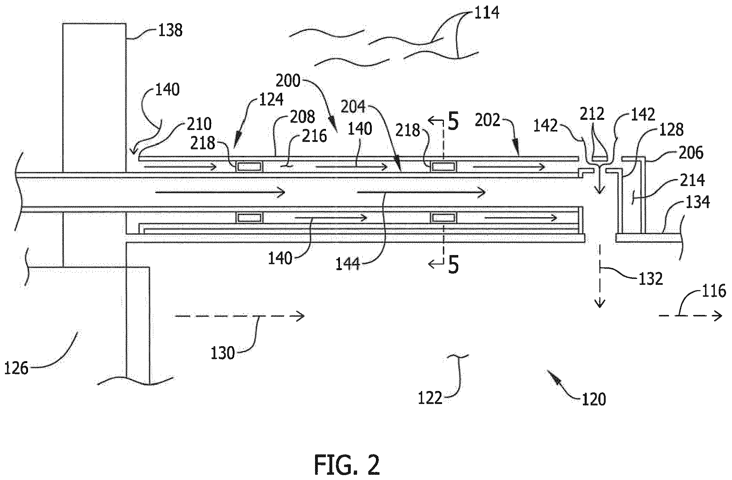

Figure 2 illustrates an exemplary conduit assembly 200 for use in supplying fuel and compressed gas 114 to secondary fuel injector 128 of AFS system 124. In the exemplary embodiment, conduit assembly 200 includes a first conduit 202 and a second conduit 204 positioned within first conduit 202. Second conduit 204 is coupled to secondary fuel injector 128 and extends from secondary fuel 128 through a casing flange 138 that supports combustion cans 120. First conduit 202 includes a housing segment 206 and a sheath segment 208 coupled to, or formed integrally with, housing segment 206. Housing segment 206 is coupled to sleeve assembly 134 such that housing segment 206 substantially shields secondary fuel injector 128 and such that sheath segment 208 extends circumferentially around (e.g., substantially envelops) second conduit 204 from housing segment 206 to an inlet end 210 of sheath segment 208 positioned adjacent to casing flange 138 in a spaced relation.

Housing segment 206 includes at least one inlet port 212 and surrounds secondary fuel injector 128 in a spaced relation, such that housing segment 206 defines a generally contained environment 214 around secondary fuel injector 128. Sheath segment 208 is spaced apart from second conduit 204 to define a circumferential channel 216 extending between second conduit 204 and sheath segment 208. As such, channel 216 is in flow communication with environment 214. In other embodiments, sheath segment 208 of first conduit 202 may be coupled directly to secondary fuel injector 128, or otherwise oriented in flow communication with secondary fuel injector 128 (e.g., first conduit 202 may not include housing segment 206 and may not enclose environment 214 in some embodiments).

In the exemplary embodiment, conduit assembly 200 also includes at least one spacer 218 within channel 216 and between second conduit 204 and sheath segment 208 of first conduit 202. Each spacer 218 extends circumferentially about second conduit 204 to facilitate supporting second conduit 204 in position within (i.e., substantially concentrically within) sheath segment 208 of first conduit 202. Although conduit assembly 200 is shown as having a pair of spacers 218 in the exemplary embodiment, conduit assembly 200 may have any suitable number of spacers 218 in other embodiments.

During operation of turbine assembly 100, compressed gas 114 flows into combustion zone 122 via inlet end 210 and inlet port(s) 212 of first conduit 202. More specifically, a first stream 140 of compressed gas 114 flows from inlet end 210, along channel 216, across spacer(s) 218, and into environment 214, and a second stream 142 of compressed gas 114 flows from inlet port(s) 212 into environment 214. Compressed gas 114 within environment 214 then flows into secondary fuel injector 128, wherein it is mixed with fuel 144 from second conduit 204 prior to being injected into combustion zone 122 as second mixture 132. Simultaneously, primary fuel injector 126 injects first mixture 130 into combustion zone 122 upstream from second mixture 132. First mixture 130 and second mixture 132 are then ignited inside combustion zone 122 to generate combustion gases 116 that flow downstream into turbine 106.

In the exemplary embodiment, it is desirable to maintain second conduit 204 in substantially concentric alignment with sheath segment 208 of first conduit 202 to facilitate providing a substantially uniform flow of compressed gas 114 along channel 216 at a substantially constant velocity selected to facilitate removing any fuel 144 that leaks from second conduit 204 by sweeping the leaking fuel 144 into secondary fuel injector 128. As such, spacers 218 provide support for second conduit 204 within sheath segment 208 of first conduit 202 and facilitate maintaining the generally concentric relationship with only a minimal obstruction to the flow of compressed gas 114 along channel 216. In other embodiments, spacers 218 may not support second conduit 204 in substantially concentric alignment with sheath segment 208 of first conduit 202, but rather second conduit 204 may be positioned off-center within sheath segment 208.

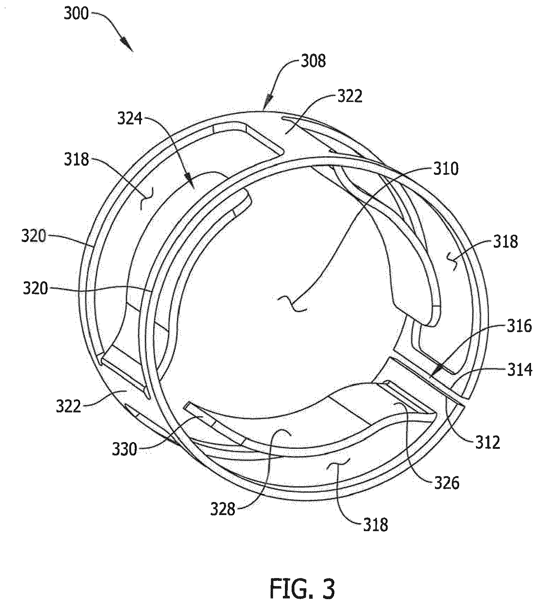

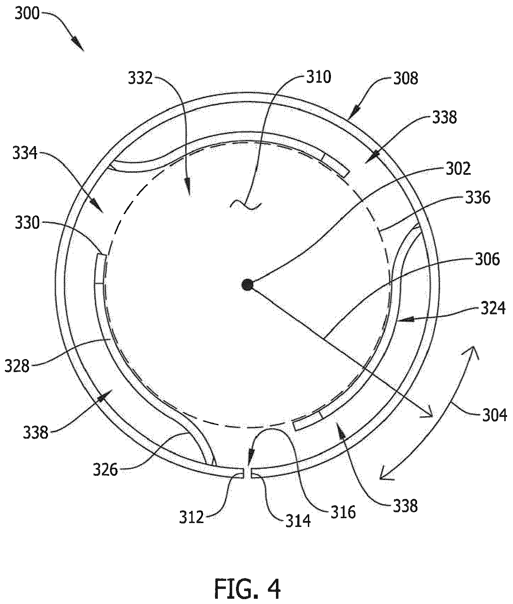

Figures 3 and 4 are perspective and side elevation views, respectively, of an exemplary spacer 300 for use in conduit assembly 200 (shown in Figure 2). In the exemplary embodiment, spacer 300 has a central axis 302, and is defined by a circumferential dimension 304 extending about central axis 302, and a radial dimension 306 extending from central axis 302. Spacer 300 has a substantially ring-shaped frame 308 that defines (i.e., substantially circumscribes) an opening 310 that extends axially through spacer 300. Frame 308 has a first end 312 and a second end 314 that are spaced apart from one another at an axially-extending seam 316, and frame 308 is fabricated from a resiliently-flexible material (e.g., a treated metal) such that, when first and second ends 312 and 314 are separated from one another at seam 316, frame 308 flexes in the circumferential and radial dimensions 304 and 306 to resiliently increase the size of opening 310. In other embodiments, frame 308 may be an endless band (i.e., may not have ends 312 and 314) and, therefore, may not define seam 316, such that frame 308 may not be flexible to increase the size of opening 310. In other embodiments, spacer 300 may have any suitable shape (and, therefore, any suitable dimensions) that facilitate enabling spacer 300 to function as described herein. For example, in some embodiments, frame 308 may not be substantially ring-shaped.

In the exemplary embodiment, frame 308 includes a plurality of cutouts 318 that are each defined by a pair of first arms 320 that are axially-spaced apart from one another, and a pair of second arms 322 that are circumferentially-spaced apart from one another and that extend between first arms 320. As such, cutouts 318 are spaced circumferentially about opening 310 between frame first end 312 and frame second end 314. Although frame 308 has three cutouts 318 in the exemplary embodiment, frame 308 may have any suitable number of cutouts 318 in other embodiments. Moreover, although each cutout 318 extends a longer distance in circumferential dimension 304 than along axis 302 in the exemplary embodiment, cutouts 318 may be shaped longer (or equally as long) along axis 302 in other embodiments.

In the exemplary embodiment, spacer 300 also includes a plurality of fins 324 that are each coupled to frame 308 and extend into opening 310 at a respective cutout 318 (e.g., each fin 324 is substantially aligned with a respective one of cutouts 318). In the exemplary embodiment, each fin 324 has an arcuate shape and includes a joint segment 326 and a contact segment 328 formed integrally with joint segment 326. More specifically, each joint segment 326 is formed integrally with, and extends generally radially inward from, a respective second arm 322 of a respective cutout 318. The contact segment 328 of each respective fin 324 is arcuately-shaped and extends generally circumferentially from its respective joint segment 326 to a distal end 330 such that collectively contact segments 328 generally divide opening 310 into a radially inner region 332 and a radially outer region 334. Particularly, each contact segment 328 extends generally circumferentially within opening 310 such that contact segments 328 generally define a circumferential boundary 336 that divides opening 310 into radially inner region 332 and radially outer region 334. As such, joint segments 326 generally divide radially outer region 334 into a plurality of circumferential portions 338. Because each joint segment 326 is resiliently-flexible, each respective contact segment 328 is displaceable generally radially outward. In other embodiments, fins 324 may not be resiliently-flexible. Moreover, although spacer 300 is illustrated with three fins 324 in the exemplary embodiment, in other embodiments spacer 300 may include any suitable quantity of fins 324 (e.g., spacer 300 may have at least three fins 324 in some embodiments).

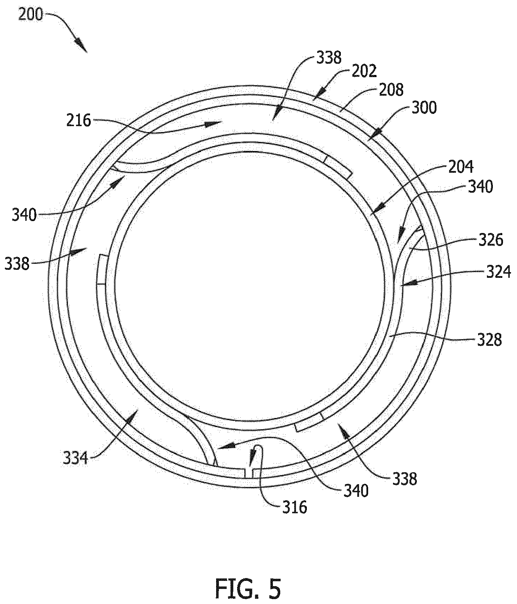

Figure 5 is a schematic illustration of spacer 300 between second conduit 204 and sheath segment 208 of first conduit 202 in conduit assembly 200. In the exemplary embodiment, second conduit 204 extends through opening radially inner region 332 such that contact segments 328 of fins 324 are seated substantially circumferentially against and tangentially support second conduit 204, and such that arms 320 and 322 of frame 308 are seated circumferentially against sheath segment 208 of first conduit 202. As such, spacer 300 facilitates maintaining a substantially concentric alignment of second conduit 204 within sheath segment 208 of first conduit 202. Moreover, when compressed gas 114 flows along channel 216 and through spacer 300 (i.e., through circumferential portions 338 of opening radially outer region 334), compressed gas 114 is minimally obstructed due, at least in part, to the shape of fins 324.

More specifically, the minimally obstructive nature of spacer 300 is facilitated at least in part because, although spacer 300 contacts a majority of the circumference of second conduit 204 (e.g., at least half of the circumference of second conduit 204), spacer 300 may have no more than ten fins 324 that extend generally radially across channel 216 at no more than ten locations 340 in some embodiments. For example, spacer 300 may have no more than five fins 324 that extend generally radially across channel 216 at no more than five locations 340 in some embodiments, or spacer 300 may have no more than three fins 324 that extend generally radially across channel 216 at no more than three locations 340 as shown in the exemplary embodiment. Alternatively, spacer 300 may have any suitable quantity of fins 324 that extend across channel 216 at any suitable quantity of locations 340 that facilitates enabling spacer 300 to function as described herein.

As such, spacer 300 facilitates maintaining the substantial concentricity of conduits 202 and 204 with minimal obstruction to compressed gas 114 flowing along channel 216, which enables compressed gas 114 to flow through channel 216 in a substantially undisturbed (e.g., substantially circumferentially-uniform) manner and at a substantially constant velocity selected to facilitate removing any fuel 144 that leaks from second conduit 204 by sweeping the leaking fuel 144 into secondary fuel injector 128. In the event that first conduit 202 and/or second conduit 204 changes position and/or shape during operation of turbine assembly 100 (e.g., in the event that second conduit 204 vibrates within first conduit 202), spacer 300 can flex (e.g., at seam 316 and/or at joint segments 326 of fins 324) to effectively dampen the position and/or shape changes for better maintaining proper alignment of second conduit 204 within first conduit 202. Thus, spacer 300 facilitates reducing the wear on conduits 202 and 204 that would otherwise result from conduits 202 and 204 contacting one another during operation of turbine assembly 100.

The methods and systems described herein facilitate maintaining a desired alignment of conduits. Moreover, the methods and systems facilitate maintaining the shape of a channel defined between substantially concentrically-aligned conduits. Thus, the methods and systems facilitate providing a substantially uniform flow of compressed gas along a channel defined between substantially concentric conduits in an AFS system of a turbine assembly. As such, the methods and systems facilitate ensuring that compressed gas can flow over a fuel conduit in an AFS system of a turbine assembly at a substantially constant velocity that is high enough to sweep fuel leaking from the fuel conduit into a secondary fuel injector of the AFS system, thereby containing fuel leaks in the AFS system. Therefore, the methods and systems facilitate enabling an AFS system of a turbine assembly to operate more effectively, which in turn enables improvements in the emissions quality of the turbine assembly.

Exemplary embodiments of methods and systems are described above in detail. The methods and systems described herein are not limited to the specific embodiments described herein, but rather, components of the methods and systems may be utilized independently and separately from other components described herein. For example, the methods and systems described herein may have other applications not limited to practice with turbine assemblies, as described herein. Rather, the methods and systems described herein can be implemented and utilized in connection with various other industries.

While the invention has been described in terms of various specific embodiments, those skilled in the art will recognize that the invention can be practiced with modification within the spirit and scope of the claims.

Various aspects and embodiments of the present invention are defined by the following numbered clauses:
1. A spacer comprising:
   a substantially ring-shaped frame that defines an opening therein having a radius; and
   a plurality of fins having an arcuate shape and extending a distance generally radially inward from said frame for tangentially supporting a conduit extending through the opening.
2. A spacer in accordance with clause, wherein the opening has a circumference and each of said fins comprises a joint segment that extends generally radially into the opening from said frame and a contact segment that extends generally circumferentially from said joint segment within the opening.
3. A spacer in accordance with any preceding clause, wherein said contact segments generally define a circumferential boundary that divides the opening into a radially inner region and a radially outer region.
4. A spacer in accordance with any preceding clause, wherein each of said fins is resiliently-flexible at said joint segment.
5. A spacer in accordance with any preceding clause, wherein said spacer comprises at least three fins.
6. A spacer in accordance with any preceding clause, wherein said frame comprises a seam such that said frame is resiliently-flexible.
7. A spacer in accordance with any preceding clause, wherein said frame comprises a plurality of cutouts, each of said fins being aligned with one of said cutouts.
8. A conduit assembly comprising:
   a first conduit;
   a second conduit positioned within said first conduit to define a channel between said first conduit and said second conduit; and
   a spacer positioned between said first conduit and said second conduit within the channel, wherein said spacer comprises:
      a substantially ring-shaped frame that defines an opening therein having a radius; and
      a plurality of fins having an arcuate shape and extending a distance generally radially inward from said frame for tangentially supporting said second conduit in substantially concentric alignment with said first conduit within the opening.
9. A conduit assembly in accordance with any preceding clause, wherein the opening has a circumference and each of said fins comprises a joint segment that extends generally radially into the opening from said frame and a contact segment that extends generally circumferentially from said joint segment within the opening.
10. A conduit assembly in accordance with any preceding clause, wherein said contact segments generally define a circumferential boundary that divides the opening into a radially inner region and a radially outer region.
11. A conduit assembly in accordance with any preceding clause, wherein each of said fins is resiliently-flexible at said joint segment.
12. A conduit assembly in accordance with any preceding clause, wherein said spacer comprises at least three fins.
13. A conduit assembly in accordance with any preceding clause, wherein said frame comprises a seam such that said frame is resiliently-flexible.
14. A turbine assembly comprising:
   a combustion can; and
   an axial fuel staging (AFS) system coupled to said combustion can, wherein said AFS system comprises a secondary fuel injector and a conduit assembly for supplying fuel and compressed gas to said secondary fuel injector, said conduit assembly comprising a first conduit, a second conduit positioned within said first conduit to define a channel between said first conduit and said second conduit, and a spacer positioned between said first conduit and said second conduit within the channel, said spacer comprising:
      a substantially ring-shaped frame that defines an opening therein having a radius; and
      a plurality of fins having an arcuate shape and extending a distance generally radially inward from said frame for tangentially supporting said second conduit in substantially concentric alignment with said first conduit within the opening.
15. A turbine assembly in accordance with any preceding clause, wherein the opening has a circumference and each of said fins comprises a joint segment that extends generally radially into the opening from said frame and a contact segment that extends generally circumferentially from said joint segment within the opening.
16. A turbine assembly in accordance with any preceding clause, wherein said contact segments generally define a circumferential boundary that divides the opening into a radially inner region and a radially outer region.
17. A turbine assembly in accordance with any preceding clause, wherein each of said fins is resiliently-flexible at said joint segment.
18. A turbine assembly in accordance with any preceding clause, wherein said spacer comprises at least three fins.
19. A turbine assembly in accordance with any preceding clause, wherein said frame comprises a seam such that said frame is resiliently-flexible.
20. A turbine assembly in accordance with any preceding clause, wherein said second conduit is a fuel conduit, and said first conduit is a compressed gas conduit.

## Claims

1. A spacer (300) comprising:
a substantially ring-shaped frame (308) that defines an opening (310) therein having a radius; and
a plurality of fins (324) having an arcuate shape and extending a distance generally radially inward from said frame for tangentially supporting a conduit extending through the opening.

2. A spacer (300) in accordance with claim 1, wherein the opening (310) has a circumference and each of said fins (324) comprises a joint segment (326) that extends generally radially into the opening from said frame (308) and a contact segment (328) that extends generally circumferentially from said joint segment within the opening.

3. A spacer (300) in accordance with claim 2, wherein said contact segments (328) generally define a circumferential boundary (336) that divides the opening (310) into a radially inner region (332) and a radially outer region (334).

4. A spacer (300) in accordance with claim 2 or 3, wherein each of said fins (324) is resiliently-flexible at said joint segment (326).

5. A spacer (300) in accordance with any preceding claim, wherein said spacer comprises at least three fins (324).

6. A spacer (300) in accordance with any preceding claim, wherein said frame (308) comprises a seam (316) such that said frame is resiliently-flexible.

7. A spacer (300) in accordance with any preceding claim, wherein said frame (308) comprises a plurality of cutouts (318), each of said fins (324) being aligned with one of said cutouts.

8. A conduit assembly (200) comprising:
a first conduit (202);
a second conduit (204) positioned within said first conduit to define a channel (216) between said first conduit and said second conduit; and
a spacer (218, 300) positioned between said first conduit and said second conduit within the channel, wherein said spacer comprises:
a substantially ring-shaped frame (308) that defines an opening (310) therein having a radius; and
a plurality of fins (324) having an arcuate shape and extending a distance generally radially inward from said frame for tangentially supporting said second conduit in substantially concentric alignment with said first conduit within the opening.

9. A conduit assembly (200) in accordance with claim 8, wherein the opening (310) has a circumference and each of said fins (324) comprises a joint segment (326) that extends generally radially into the opening from said frame (308) and a contact segment (328) that extends generally circumferentially from said joint segment within the opening.

10. A conduit assembly (200) in accordance with claim 9, wherein said contact segments (328) generally define a circumferential boundary (336) that divides the opening (310) into a radially inner region (332) and a radially outer region (334).
